# EUROPEAN PATENT APPLICATION

(11) **EP 1 186 403 A1**
(43) Date of publication of application: **13.03.2002**
(21) Application number: 00830611.0
(22) Date of filing: 07.09.2000
(51) Int. Cl.: B29D 31/505, A43B 7/36

(54) **Method for obtaining thermoplastic material shoes which discharge static electricity permanently**

(71) Applicant: Suolificio Romagnolo SNC, 48019 Granarolo Faentino (Ravenna) (IT); Guantificio Altotiberino Ecosanit Calzature SNC, 52031 Anghiari (Arezzo) (IT)
(72) Inventor: Lama, Ettore, 47100 Forli (IT); Veri, Doriano, 52031 Anghiari (Arezzo) (IT)
(74) Representative: Sassatelli, Franco T., Dr.

(57) **Abstract**

The shoe is to be formed by moulding using two injection ducts one of which puts the antistatic mixture with permanent discharging effect so forming a central predominance part (1) for ground contact with on the foot support base a part (2) to transmit the electrostatic energy, while the other injection duct puts the material to form the remaining insulating part (3) to complete the shoe.

## Description

It is known that the energy gave out from the human body is uncharged on the ground by the tips and during the movement in the erect position, this happens through the lower limbs. And on the base that to pursue a basic hygienics, as currently happens into the search sectors and in the hospitals, into the production of foods and in other fields, the clothes of the operators must be periodically submitted to a washing and disinfection into pressure cooker, single shaped clog shoes are actually requested. These shoes in plastic material and able to maintain their structure also to the high temperature into the pressure cooker and also arranged with a suitable unchanged means permanently operating till their wearing down. According to the prior art are not known methods able to resolve this problem. An old method provided, centrally in the front part of the feet support, a conductor small plate insertion on a reference part present on the stamping base. The principle disadvantage of said method is due to the fact to not create an uniform structure of the shoe bottom so determing, at the beginning, the differentiated wearing of the bottom parts and, in succession, the disconnectedness of the same bottom so to determine the breaking down of the shoe.

A second method consists of making a thermoplastic shoe with the disposition into the mold, in correspondence of the heel, of an insert part lowering into the same heel and in vulcanization thermosetting material acting to energetics conductivity by graphite. This second method has the disadvantage to determine an assembling precariousness between the two parts such as it puts in touch a thermosetting body with a thermoplastic body, bodies that present different reactions at the high temperatures reach inside the sterilization processes in the pressue cooker (134°). This brings to determine the hardening and consequently the consolidation of the thermosetting part while on the other hand the thermoplastic part is brought to a softening. As a consequence an assembling condition fading out of the two bodies is coming and so causing during the using, for effect of the push stresses given by the foot, a withdrawal of the conductor means so not more actuating the ground contact. Other big negative aspect of this method is to attribute to the fact that often the operators work with upright heel so missing the ground contact.

An other method provides a shoe body to be realized in resin adding oil so to create an antistatic effect.

The said method is unreliable such as the migration that comes to be produced toward the shoe bottom of the conductor substance and its dispersion in succession during the washing into the pressure cooker comes to exclude in short time the energetic conducibility effect.

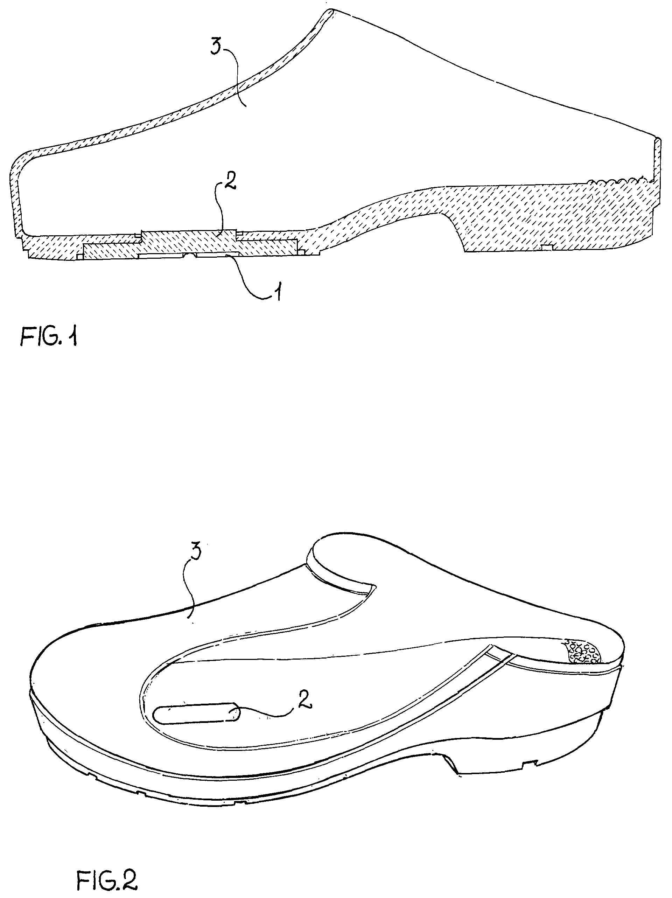

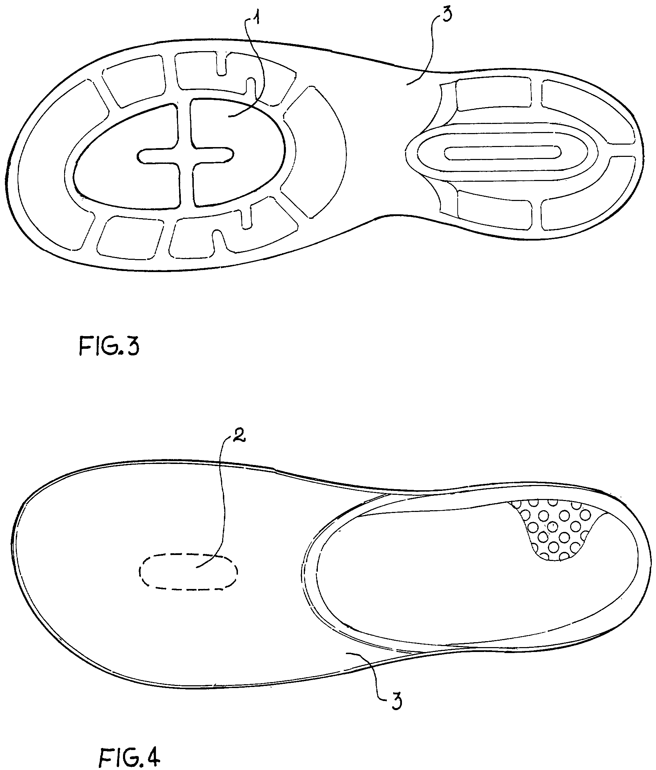

The invented method gives the problem solution by actuating a new moulding process which provides the shoe formed by a basic thermoplastic body so determining a sole reaction also in presence of the high temperature to be determined in the sterilization phase inside the pressure cooker. Said new shoe to be basically characterized into the bottom by a central predominance part, of front ground contact with an appropriate part of the foot contact on the inside support wall, to be arranged for the electrostatic and electric energy uncharging till a voltage of 250 V. Being said capacity to be assure from the thermoplastic material mixed with antistatic carbon black operating the energetic conducibility with stabilizating effect and assuring other to the antistatic feature also the kwnon reinforced charge. Essentially the shoe is to be formed by moulding using two injection ducts one of which puts the antistatic mixture with permanent effect so forming a central predominance part 1 for ground contact with on the foot support base a part 2 to transmit the electrostatic energy while the other injection duct to put the material to form the remaining insulating part 3 to complete the shoe. A preferred embodiment of the shoe is illustrated in schematic and indicative way in the drawings of sheets 1 and 2. In sheet 1 fig. 2 is longitudinal section view of the shoe 3 to show the energetic conductor part 1-2.

Fig. 2 is broken perspective view of the shoe to show the part 2 of foot contact. In sheet 2 fig. 3 is view of the bottom to ground contact of the shoe to show the predominant part 1. Fig. 4 is view from the top of the shoe 3 to show the upper part 2 of foot contact in outline.

## Claims

1. Method to obtain a permanent uncharged into the thermoplastic material shoes in which the shoe is to be formed by moulding, **characterized in that**:
two injection ducts are used, one of which puts the antistatic mixture with permanent effect so forming a central predominance part (1) for ground contact with on the foot support base a part (2) to transmit the electrostatic energy, while the other injection duct put the material to form the remaining insulating part (3) to complete the shoe.
